(19) Europäisches Patentamt
European Patent Office
Office européen des brevets

(11) **EP 1 821 482 A2**

(12) **EUROPEAN PATENT APPLICATION**

(43) Date of publication:
**22.08.2007 Bulletin 2007/34**

(51) Int Cl.:
***H04L 27/26*** *(2006.01)*

(21) Application number: **07250665.2**

(22) Date of filing: **16.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.02.2006 KR 20060015239**

(71) Applicant: **Pantech&Curitel Communications, Inc. Seoul (KR)**

(72) Inventors:
• **Kim, Dong-han
  Chungcheongnam-do
  (KR)**
• **Park, Kyung
  Seo-gu
  Daejeon-si (KR)**

(74) Representative: **Mounteney, Simon James
  Marks & Clerk
  90 Long Acre
  London WC2E 9RA (GB)**

(54) **Method and apparatus for transmitting and receiving pilot symbols in orthogonal frequency-division multiplexing based communicaion systems**

(57) A method for transmitting and receiving pilot symbols in an orthogonal frequency division multiplexing (OFDM)-based communication system. Pilot symbols are mapped to pilot tone frequencies assigned to terminals, and even-numbered or odd-numbered pilot symbols are phase-rotated to be orthogonal. An apparatus for transmitting pilot symbols in an OFDM-based communication system is provided. A tone mapping unit maps pilot tone frequencies assigned to terminals onto pilot symbols to be transmitted, and a phase rotation unit phase-rotates either even-numbered or odd-numbered pilot symbols. An apparatus for transmitting pilot symbols in an OFDM-based communication system is provided. A tone mapping unit maps pilot tone frequencies assigned to terminals onto pilot symbols to be transmitted, and a transmission unit stores a signal in a buffer and transmits a first portion of the signal in a first pilot symbol and a second portion of the signal in a second pilot symbol.

FIG.3

EP 1 821 482 A2

**Description**

BACKGROUND OF THE INVENTION

FIELD OF THE INVENTION

The present invention relates to a mobile communication system and, more particularly, to a method and apparatus for transmitting and receiving pilot symbols in an orthogonal frequency-division multiplexing (OFDM)-based communication system.

DISCUSSION OF THE BACKGROUND

Orthogonal frequency-division multiplexing (OFDM) is based upon the principle of frequency-division multiplexing, but is used as a digital modulation scheme. The bit stream that is to be transmitted is split into several parallel bit streams. The available frequency spectrum is divided into several sub-channels, and each low-rate bit stream is transmitted over one sub-channel by modulating a sub-carrier using a modulation scheme such as phase-shift keying (PSK) or quadrature amplitude modulation (QAM). The sub-carrier frequencies are chosen so that the modulated bit streams are orthogonal to each other. Thus, cross-talk between the sub-channels is eliminated.

The primary advantage of OFDM is its ability to transmit bit streams under severe channel conditions - for example, multipath and narrowband interference - without complex equalization filters. Bit streams are transmitted as consecutive symbols. To minimize multipath and narrowband interference, a protection segment longer than a maximum delay spread of a wireless channel is placed between consecutive OFDM symbols. A cyclic prefix (CP) is added to the protection segment. Thus, it is possible to prevent multipath interference between symbols. In addition, since sub-carriers are approximated as narrowband frequency non-selective fading channels, it is possible to simply construct the configuration for channel estimation and equalization in frequency domains.

When a signal inputted to an inverse fast Fourier transform (IFFT) unit is subjected to discrete Fourier transform (DFT), the peak to average power ratio (PAPR) of the signal can be reduced for transmission. A transmission signal with a reduced PAPR consumes less power in transmission. Thus, OFDM is appropriate for a terminal that will transmit signals and has severe power restrictions or a limited power source.

In addition, since the coverage and power efficiency can be improved where a transmission signal has a reduced PAPR, research has been conducted recently on OFDM as an uplink high-rate data transmission method.

In an OFDM-based communication system, a single frame includes $S_P$ pilot symbols and $S_L$ data symbols. The number Sp of pilot symbols may be a multiple of 2. The pilot symbols and data symbols inserted to a single frame are time-multiplexed. The period $T_P$ of the pilot symbol is half the period $T_L$ of the data symbol in order to reduce the bandwidth overhead caused by the transmission of the pilot symbol. In OFDM, since the period of a symbol is inversely proportional to the interval between tones constituting the symbol, the interval $\Delta fp$ between pilot tones in the pilot symbol is twice the interval $\Delta f_L$ between data tones in the data symbol ($\Delta fp = 2 \cdot \Delta f_L$)

Accordingly, a set of pilot tone frequencies, where a pilot tone frequency $P_{i,s}$ is assigned to an i-th terminal in an s-th pilot symbol, for the pilot tone transmission is equal to a half of a set of data tone frequencies $K_i$ for the data tone transmission. The reduced number of pilot tone frequencies relative to the number of data tone frequencies results in lower sampling rates for conducting channel estimation.

In order to solve the above-mentioned problem, tone mapping methods have been developed. Examples of the tone mapping methods for multiple access include a localized data tone mapping method and a distributed data tone mapping method. In the localized data tone mapping method, adjacent data tones are assigned to transmit data. Specifically, the localized data tone mapping method performs multiple access by assigning a frequency set $K_i$ of adjacent $M_L$ data tones to the i-th terminal. The localized data tone mapping method uses interpolation between pilot tones for channel estimation.

In the distributed data tone mapping method, data tones arranged at regular intervals are assigned to transmit data. Specifically, the distributed data tone mapping method performs multiple access by assigning a frequency set $K_i$ of $M_L$ data tones arranged at a frequency interval of $L \cdot \Delta f_L$ to the i-th terminal. The distributed data tone mapping method uses staggered pilots for channel estimation.

However, the distributed data tone mapping method using staggered pilots has a problem. The sampling rate for channel estimation can be increased by assigning different pilot tone frequency offsets to individual pilot symbols. However, the frequency efficiency of the pilot symbols decreases since pilot tones are transmitted over only half of the frequencies corresponding to individual data tones constituting the data symbol.

SUMMARY OF THE INVENTION

This invention provides a method for transmitting and receiving pilot symbols for channel estimation in an orthogonal frequency-division multiplexing (OFDM)-based communication system.

This invention also provides an apparatus for transmitting pilot symbols for channel estimation in an orthogonal frequency-division multiplexing (OFDM)-based communication system.

This invention also provides an apparatus for recieving pilot symbols for channel estimation in an orthogonal frequency-division multiplexing (OFDM)-based communication system.

Additional features of the invention will be set forth in the description which follows, and in part will be apparent from the description, or may be learned by practice of the invention.

The present invention discloses a method for transmitting pilot symbols in an OFDM -based communication system, including taking Inverse Fast Fourier Transform (IFFT) of a first pilot symbol and a second pilot symbol each mapped to pilot tone frequencies assigned to a plurality of terminals, and phase-rotating the second pilot symbol.

The present invention also discloses a method for transmitting pilot symbols in an OFDM-based communication system, including taking IFFT of pilot symbols mapped to pilot tone frequencies assigned to terminals, storing a signal output from the IFFT, and transmitting a first portion of the signal in a first pilot symbol and a second portion of the signal in a second pilot symbol.

The present invention also discloses a method for receiving pilot symbols in an OFDM-based communication system, including converting the pilot symbols to parallel data, eliminating a cyclic prefix from the parallel data, storing a first pilot symbol with no cyclic prefix in a buffer , connecting first pilot symbol and a second pilot symbol together, taking $N_L$-point Fast Fourier Transform (FFT) of the connected pilot symbols to output an FFT output signal, extracting pilot tones from the FFT output signal, estimating channels using the pilot tones, and performing channel equalization of data symbols based on the channel estimation to demodulate data.

The present invention also discloses an apparatus for transmitting pilot symbols in an OFDM-based communication system, including a tone mapping unit to map pilot tone frequencies assigned to terminals to pilot symbols to be transmitted, and a phase rotation unit to receive the pilot symbols, and to phase-rotate even-numbered pilot symbols or odd-numbered pilot symbols.

The present invention also discloses an apparatus for transmitting pilot symbols in an OFDM-based communication system, including a tone mapping unit to map pilot tone frequencies assigned to terminals to pilot symbols to be transmitted, and a transmission unit to store a signal in a buffer and to transmit the signal over two pilot symbols.

The present invention also discloses an apparatus for receiving pilot symbols in an OFDM-based communication system, including a conversion unit to convert the pilot symbols to parallel data, a cyclic prefix elimination unit to eliminate a cyclic prefix from the parallel data, a buffer to store a first pilot symbol, a Fast Fourier Transform (FFT) unit to connect the first pilot symbol and a second pilot symbol together in the order received, to take $N_L$-point FFT of the two pilot symbols, and to output an FFT output signal, a tone extraction unit to extract pilot tones from the FFT output signal, a channel estimation unit to estimate channels using the pilot tones, and a channel equalization unit to perform channel equalization of data symbols based on the channel estimation. $N_L$ represents a number of data tones of the data symbols.

The present invention also discloses a method for transmitting pilot symbols in an OFDM-based communication system, including: taking Inverse Fast Fourier Transform (IFFT) of pilot symbols mapped to pilot tone frequencies assigned to terminals, and phase-rotating one of two adjacent pilot symbols.

The present invention also discloses an apparatus for transmitting pilot symbols in an OFDM-based communication system, including a tone mapping unit to map pilot tone frequencies assigned to terminals to pilot symbols to be transmitted, and a phase rotation unit to receive the pilot symbols, and to phase-rotate one of two adjacent pilot symbols.

It is to be understood that both the foregoing general description and the following detailed description are exemplary and explanatory and are intended to provide further explanation of the invention as claimed.

BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 shows a frame structure in an OFDM-based communication system.

FIG. 2 shows data symbols and pilot symbol over the time and frequency plane according to the frame structure of FIG. 1.

FIG. 3 shows a method for configuring an s-th pilot symbol of an i-th terminal in an OFDM-based communication system according to an exemplary embodiment of the present invention.

FIG. 4 shows a method for configuring an s-th pilot symbol of an i-th terminal in an OFDM-based communication system according to another exemplary embodiment of the present invention.

FIG. 5 is a block diagram of an apparatus for transmitting pilot symbols according to another exemplary embodiment of the present invention.

FIG. 6 is a block diagram of an apparatus for transmitting pilot symbols according to another exemplary embodiment of the present invention.

FIG. 7 is a block diagram of an apparatus for receiving pilot symbols according to another exemplary embodiment of the present invention.

FIG. 8 is a flow chart of a method for transmitting pilot symbols according to another exemplary embodiment of the present invention.

FIG. 9 is a flow chart of a method for transmitting pilot symbols according to another exemplary embodiment of the present invention.

FIG. 10 is a flow chart of a method for receiving pilot symbols according to another exemplary embodiment of the present invention.

## DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "on" or "connected to" another element, it can be directly connected to the other element, electrically or mechanically, or intervening elements or layers may be present. In contrast, where an element is referred to as being "directly connected to" another element, there are no intervening elements present.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

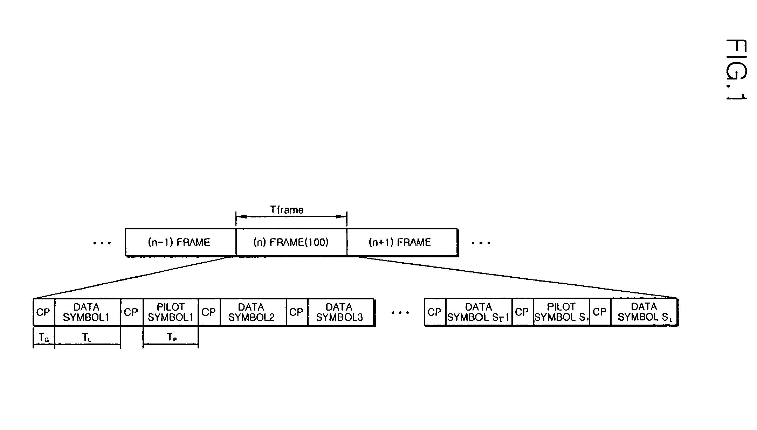

FIG. 1 shows a frame structure in an Orthogonal Frequency Division Multiplexing (OFDM)-based communication system.

An n-th frame 100, arranged in a series of frames (n-1), n, (n+1) and having a time period of $T_{frame}$, includes Sp pilot symbols and $S_L$ data symbols. A data symbol has a time period of $T_L$. During the time period $T_L$, a number L of terminals each carry data on $M_L$ data tones that are uniquely assigned by a base station, and transmit the data. A tone may also be referred to as a sub-carrier. $N_L$ is the size of IFFT that is used to modulate the data tones in transmitter and receiver units, and is equal to a total number of data tones that are used in the data symbol. Thus, the number of data tones $M_L$ assigned to one terminal may be equal to $N_L/L$.

The pilot symbol, together with the data symbol, is time division-multiplexed, and is carried on the pilot tone for channel estimation, synchronization between the terminal and base station, and uplink signal quality measurement. The pilot symbol has a time period of $T_P$ that is half the time period $T_L$ of the data symbol to reduce a bandwidth overhead caused by the pilot tone transmission.

The time period of a symbol is inversely proportional to the frequency interval between tones of the symbol. Since the pilot symbol time period $T_P$ is half of the data symbol time period $T_L$, the interval $\Delta fp$ between tones of the pilot symbol is twice the interval $\Delta f_L$ between tones of the data symbol ($\Delta fp = 2 \cdot \Delta f_L$). Accordingly, a number Np of tones of the pilot symbol is half a number $N_L$ of tones of the data symbol. Np may be the size of the IFFT that modulates the pilot tones of the pilot symbol. While L terminals may use the Np pilot tones assigned thereto, each of the L terminals generally transmits Mp pilot tones, which is equal to half of a number $M_L$ of tones of the data symbol carried on each of the L terminals. A protection period with a time period $T_G$ is inserted ahead of each pilot symbol and data symbol to prevent interference between symbols caused by a multipath delay component. In FIG. 1, a cyclic prefix (CP) is used as the protection period.

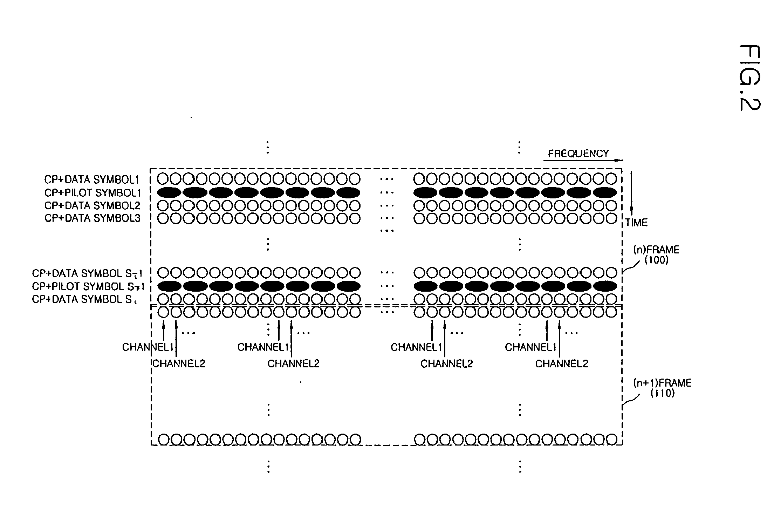

FIG. 2 illustrates data symbols and pilot symbols indicated over the time and frequency plane according to the frame structure of FIG. 1.

As described above, a frame 100 includes Sp pilot symbols and $S_L$ data symbols on a time axis. Each terminal uses a frequency bandwidth assigned thereto as shown on a frequency axis. For example, when terminal 1 is set to use channel 1, channel 1 is assigned to terminal 1 at regular frequency intervals as shown in FIG. 2. Similarly, when terminal 2 is set to use channel 2, channel 2 is assigned to terminal 2 at regular frequency intervals.

Examples of tone mapping methods for multiple access include a localized data tone mapping method and a distributed data tone mapping method. As described above, the distributed data tone mapping method performs multiple access by assigning a frequency set $K_i$ of $M_L$ data tones with a frequency interval of $L \cdot \Delta f_L$ to an i-th terminal.

The OFDM-based communication system according to an exemplary embodiment of the invention, which uses the distributed data tone mapping method, improves the channel estimation performance by increasing the sampling rate of frequencies for channel estimation and increasing the frequency efficiency of pilot tones.

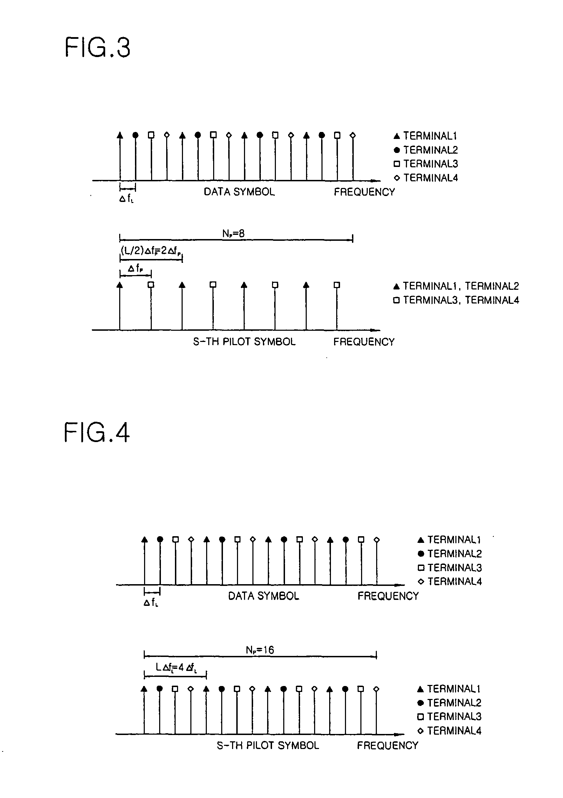

FIG. 3 shows a method for configuring an s-th pilot symbol of an i-th terminal in an OFDM-based communication system according to an exemplary embodiment of the present invention.

That is, FIG. 3 shows a method for configuring a pilot tone in an s-th pilot symbol of an i-th terminal that is appropriate for a distributed data tone mapping method in an OFDM-based communication system according to an exemplary embodiment of the present invention.

It can be seen from FIG. 3 that the pilot tone mapping is performed by mapping Mp pilot tones with a frequency interval of $(L/2) \cdot \Delta f_p$ for channel estimation of a frequency set $K_i$ of $M_L$ data

tones. As shown in FIG. 3, a frequency interval of $(L/2) \cdot \Delta f_p$ is equal to the frequency interval $L \cdot \Delta f_L$ of data tones. The pilot tone mapping is performed in the s-th pilot symbol of the i-th terminal according to the following Equation 1:

[Equation 1]

$$P_{i.s} = \{ p\Delta f_P \mid p = j(L/2) + floor(i/2), 0 \le j < M_L \}, 0 \le i < L, 0 \le s < S_P$$

where the term floor(x) denotes a maximum integer that is not greater than x. FIG. 3 shows a frequency set of pilot tones $P_{i,s}$ assigned to four terminals where $N_L$=16, L=4, $M_L$=4, Np=8 and $M_P$=2.

The i-th terminal takes Np-point IFFT of a signal where the pilot tones are mapped according to Equation 1, and generates an s-th pilot symbol output signal $x_{i,s}(n)$. In this case, the following condition $x_{i,s} = 2a(n)x_{i,s=2a+1}(n)$ may be met for an integer a, where $0 \le a < S_P/2$.

When the IFFT output signal $x_{i,s}(n)$ is inserted as the pilot signal and then transmitted after performing the pilot tone mapping based on Equation 1, a terminal having i=2·q and a terminal having i=2·q+1 both use a same pilot tone for an integer q, where $0 \le q < L/2$, as shown in FIG. 3. For example, a same pilot tone is mapped to Terminal 1 and Terminal 2, which are assigned to a same frequency. Accordingly, the pilot tone for the terminal having i=2.q and the pilot tone for the terminal having i=2·q+1 may interfere with each other in the base station. This may make channel estimation more difficult.

According to the present embodiment of the invention, the interference between a pilot tone of the (i=2·q)-th terminal and a pilot tone of the (i=2·q+1)-th terminal can be prevented by phase-rotating the Np-point IFFT output signal $x_{i,s}(n)$ of the (i=2·q+1)-th terminal by applying the following Equation 2.

[Equation 2]

$$\overline{x}_{i,s=2a}(n) = x_{i,s=2a}(n) \cdot e^{j2\pi n \frac{1}{2N_P}}, 0 \le n < N_P,$$

$$\overline{x}_{i,s=2a+1}(n) = -x_{i,s=2a+1}(n) \cdot e^{j2\pi n \frac{1}{2N_P}}, 0 \le n < N_P,$$

$$where \ i = 2q + 1, 0 \le q < L/2$$

The term $\overline{x}_{i,s}(n)$ denotes the s-th pilot symbol signal that is transmitted by the i-th terminal. The pilot symbol signal $\overline{X}_{i=2q,s}$ (n) that is transmitted by a (i=2q)-th terminal is $x_{i=2q,s}(n)$. When the pilot symbol obtained based on Equation 2 is transmitted, it is possible to increase the sampling rate of channel estimation with no interference between the pilot tones in the base station, and to improve the channel estimation performance by increasing the frequency efficiency of the pilot symbol.

FIG. 4 shows a method for configuring an s-th pilot symbol of an i-th terminal in an OFDM-based communication system according to another exemplary embodiment of the present invention.

That is, FIG. 4 shows a method for configuring a pilot tone in an s-th pilot symbol of an i-th terminal that is appropriate for the distributed data tone mapping method in an OFDM-based communication system according to another exemplary embodiment of the present invention.

It can be seen from FIG. 4 that the pilot tone mapping for channel estimation is performed by mapping pilot tones having a number equal to a number $M_L$ of data tones, and having a frequency interval of $L \cdot \Delta f_L$ equal to a frequency interval $L \cdot \Delta F_L$ of $M_L$ data tones. The pilot tone mapping is performed in the s-th pilot symbol of the i-th terminal according to the following Equation 3:

[Equation 3]

$$P_{i,s=2a} = \{p \cdot \Delta f_L | p = x \cdot L + i, 0 \le x < M_L\}, 0 \le i < L, 0 \le a < S_P / 2$$

FIG. 4 shows a frequency set of pilot tones $P_{i,s}$ assigned to four terminals where $N_L$=16, L=4, $M_L$=4, $N_P$=16 and Mp=4. An i-th terminal takes $N_L$-point IFFT of a signal where the pilot tones are mapped to generate an output signal $X_{i,s=2a}(n)$. Since the amplitude of the IFFT output signal $X_{i,s=2a}(n)$, $N_L$, is twice the amplitude of the pilot symbol, Np, the output signal is transmitted over two pilot symbols. That is, a signal representing a first $N_L$/2 pilot tones of the IFFT output signal $X_{i,s=2a}(n)$ is transmitted to a (s=2a)-th pilot signal, and a signal representing a second $N_L$/2 pilot tones of the IFFT output signal $X_{i,s=2a}(n)$ is transmitted to a (s=2a+1)-th pilot signal. This is represented as the following Equation 4:

[Equation 4]

$$\overline{x}_{i,s=2a}(n) = x_{i,s=2a}(n), 0 \le n < N_L / 2, 0 \le a < S_P / 2$$

$$\overline{x}_{i,s=2a+1}(n - N_L / 2) = x_{i,s=2a}(n), N_L / 2 \le n < N_L, 0 \le a < S_P / 2$$

While the methods of configuring pilot tones described with reference to FIG. 3 and FIG. 4 have different mathematical and graphical structures, in both methods, a same signal $x_{i,s}$ (n) is transmitted over two pilot symbols within a single frame.

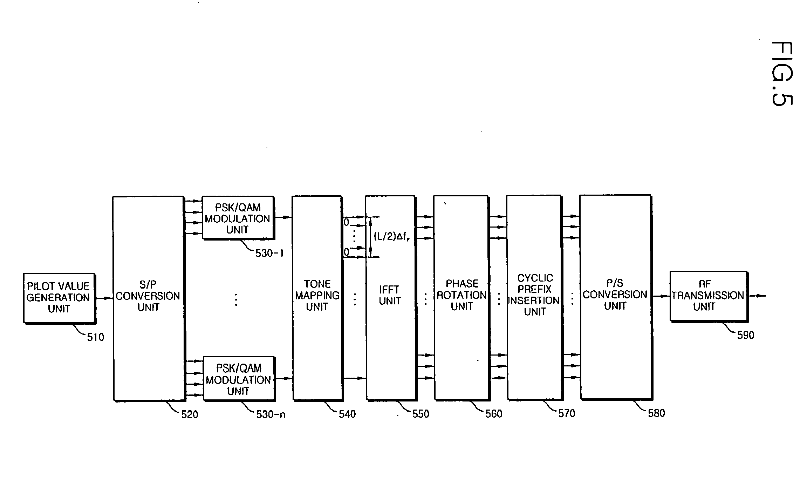

FIG. 5 is a block diagram of a pilot symbol transmitter according to-an exemplary embodiment of the present invention.

The pilot symbol transmitter includes a pilot value generation unit 510, a Serial-to-Parallel (S/P) conversion unit 520, PSK/QAM modulation units 530-1 to 530-n arranged in parallel, a tone mapping unit 540, an IFFT unit 550, a phase rotation unit 560, a cyclic prefix insertion unit 570, a Parallel-to-Serial (P/S) conversion unit 580, and a radiofrequency (RF) transmission unit 590.

The pilot value generation unit 510 generates $c \cdot M_L$ pilot values for modulating pilot tones according to a modulation order c. The S/P conversion unit 520 converts the pilot values to parallel data. The PSK/QAM modulation units 530-1 to 530-n receive the parallel data and perform PSK/QAM modulation according to the modulation order c.

The tone mapping unit 540 performs the pilot tone mapping of PSK/QAM-modulated pilot symbols grouped in units of $M_P$ as described above with reference to FIG. 3, and transmits the units to the IFFT unit 550. Specifically, Mp pilot symbols are mapped to Np tones constituting the pilot symbols at regular intervals of $L/2 \cdot \Delta f_p$, and the remaining tones are assigned zero (0). Then, they are transmitted to the IFFT unit 550. Thus, for channel estimation of the data tones, the pilot tones are mapped at regular intervals of $L/2 \cdot \Delta f_p$ over the frequency of the transmitted data tones, and the remaining tones outside a frequency of the transmitted data tones are assigned a zero (0) value.

After the IFFT unit 550 takes Np-point IFFT of the signal where the pilot tones are mapped, the phase rotation unit 560 performs phase rotation of only an output signal $x_{i=2q+1,s}(n)$ of an (i=2·q+1)-th terminal according to Equation 2. The cyclic prefix insertion unit 570 inserts a cyclic prefix CP to a phase-rotated output signal $\overline{x}_{i,s}$ (n) and a non-phase-rotated output signal. The P/S conversion unit 580 converts the output signals to serial data and transmits the serial data to the RF transmission unit 590.

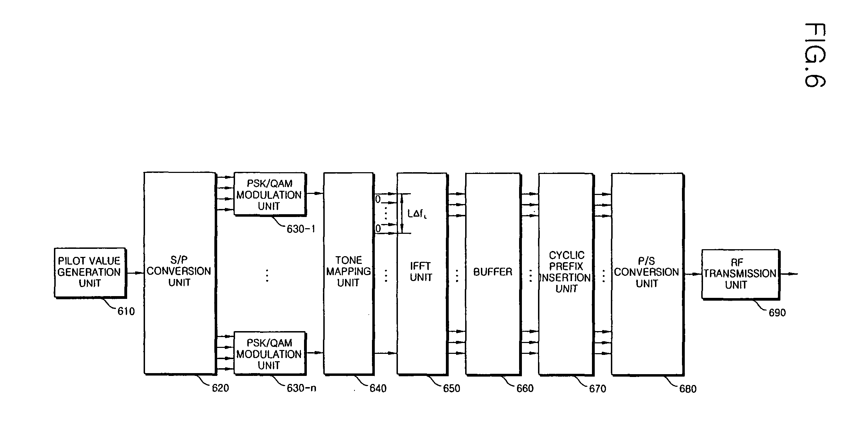

FIG. 6 is a block diagram of a pilot symbol transmitter according to another exemplary embodiment of the invention.

The pilot symbol transmitter includes a pilot value generation unit 610, an S/P conversion unit 620, PSK/QAM modulation units 630-1 to 630-n arranged in parallel, a tone mapping unit 640, an IFFT unit 650, a buffer 660, a cyclic prefix insertion unit 670, a P/S conversion unit 680, and an RF transmission unit 690.

The pilot-value generation unit 610 generates $c \cdot M_L$ pilot values for pilot tone modulation according to a modulation order c. The S/P conversion unit 620 converts the serial pilot values to parallel data, and the PSK/QAM modulation units 630-1 to 630-n perform PSK/QAM modulation of the parallel data according to the modulation order c.

The tone mapping unit 640 performs the pilot tone mapping of the PSK/QAM-modulated symbols grouped in units of $M_L$ as described above with reference to FIG. 4, and transmits the units to the IFFT unit 650. That is, $M_L$ pilot symbols are mapped to $N_L$ pilot tones constituting the pilot symbol at regular intervals of $L \cdot \Delta f_L$, and the remaining pilot tones outside a frequency of the transmitted data tones are assigned a zero (0) value. Then they are transmitted to the IFFT unit 650.

The IFFT unit 650 takes $N_L$-point IFFT of the signal where the pilot tones are mapped, and stores the signal in the buffer 660. The cyclic prefix insertion unit 670 inserts a cyclic prefix CP to an output signal $\overline{x}_{i,s}(n)$ of the buffer 660. The P/S conversion unit 680 converts it to serial data and transmits the serial data to the RF transmission unit 690.

When IFFT is taken of the signal where the pilot tones are mapped, a transmission unit including the buffer 660, cyclic prefix insertion unit 670, P/S conversion unit 680, and RF transmission unit 690 receives and stores the output signal $\overline{x}_{i,s}(n)$ in the buffer 660, and transmits the output signal $\overline{x}_{i,s}(n)$ over two pilot symbols.

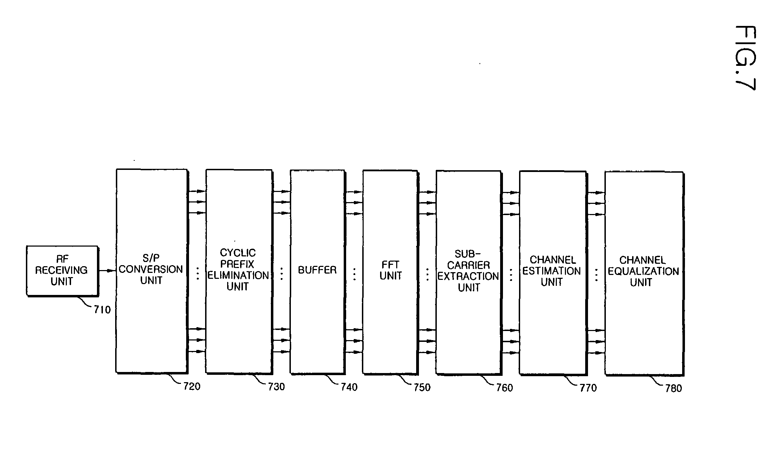

FIG. 7 is a block diagram of a pilot symbol receiver device according to another exemplary embodiment of the invention.

A signal received through an RF receiving unit 710 is converted to parallel data by an S/P conversion unit 720. A cyclic prefix elimination unit 730 eliminates a cyclic prefix CP from the parallel data. After the cyclic prefix CP is eliminated, if a received signal is a pilot symbol, the pilot symbol is stored in the buffer 740. An FFT unit 750 receives and connects two pilot symbols to each other, and takes $N_L$-point FFT of the two pilot symbols. As a result, the output signal from the FFT unit 750 has the $M_L$ pilot tones at regular intervals of $L \cdot \Delta f_L$ with no loss in orthogonality. Electric properties of pilot tones transmitted through two pilot symbols are combined with each other when the pilot symbols are combined. Thus, it is possible to increase the power of each pilot tone in the receiving terminal. As a result, it is possible to improve the channel estimation performance.

A sub-carrier extraction unit 760 extracts a pilot tone from an FFT output signal, and a channel estimation unit 770 uses the pilot tone to estimate a channel. The present embodiment describes the transmission/reception of the pilot symbol for channel estimation, but does not describe in detail a channel estimation method using the pilot tone. However, channel estimation techniques, such as Least-squares (LS) channel estimation technique or Minimum mean-squared error (MMSE) channel estimation technique, may be applied according to the calculation capabilities and performance. A channel equalization unit 780 performs channel equalization of data symbols based on channel estimation values using the pilot tones.

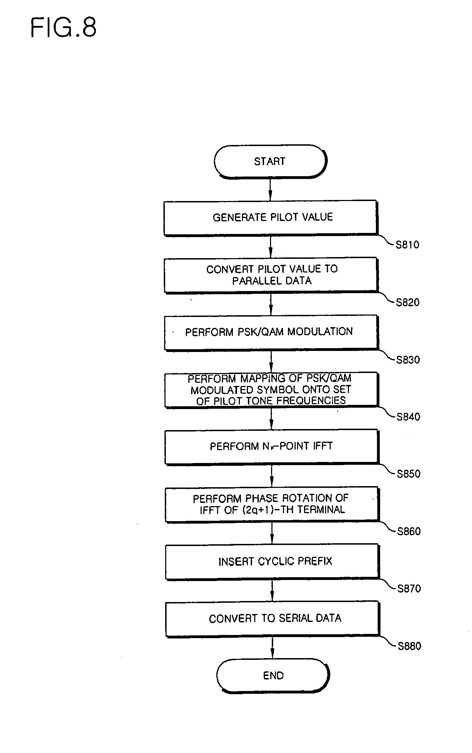

FIG. 8 is a flow chart of a method for transmitting pilot symbols according to an exemplary embodiment of the invention.

First, $c \cdot M_L$ pilot values for pilot tone modulation are generated according to a modulation order c (S810). The pilot values are converted to parallel data (S820). PSK/QAM modulation is performed on the parallel data according to the modulation order c of pilot tone (S830).

The pilot tone mapping is performed on PSK/QAM-modulated symbols grouped in units of $M_P$ per terminal as described above with reference to FIG. 3 (S840). That is, a pilot symbol is mapped to Np pilot tones constituting the pilot symbol at regular intervals of $L/2 \cdot \Delta f_P$, and the remaining tones are assigned a zero (0) value. Then, the pilot tones are transmitted to the IFFT unit 650. In other words, for channel estimation of the data tones, the pilot tones are mapped at regular intervals of $L/2 \cdot \Delta f_P$ with respect to the same frequency as that of the transmitted data tones, and the remaining tones are assigned a zero (0) value.

The Np-point IFFT is taken of the signal where the pilot tones are mapped (S850). The phase rotation is performed on the output signal $X_{i=2q+1,s}(n)$ of the (i=2·q+1)-th terminal according to Equation 2 (S860). A cyclic prefix CP is inserted to the phase-rotated output signal $x_{i,s}(n)$ and a non-phase-rotated output signal (S870), and the output signal is converted to serial data and transmitted to the RF transmission unit (S880).

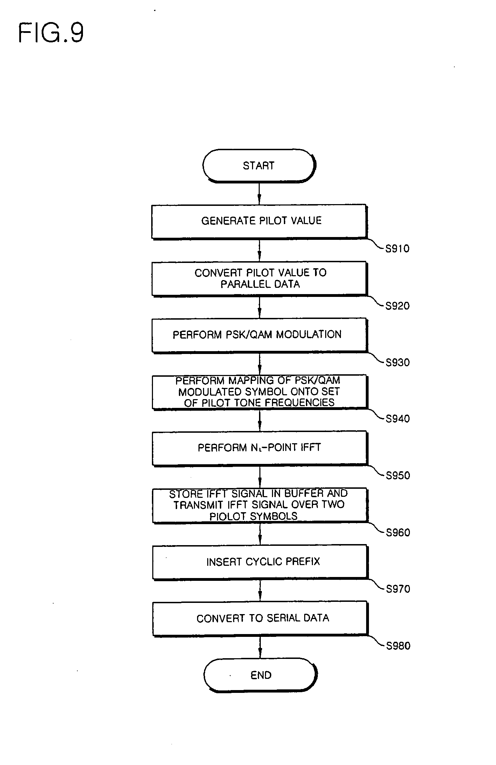

FIG. 9 is a flow chart of a method for transmitting pilot symbols according to another exemplary embodiment of the present invention.

The $c \cdot M_L$ pilot values for pilot tone modulation are generated based on the modulation order c (S910). The pilot values are converted to parallel data (S920). The PSK/QAM modulation of the parallel data is performed according to the modulation order c of the pilot tone (S930).

The pilot tone mapping of the PSK/QAM-modulated symbols grouped in units of $M_L$ is performed as described above with reference to FIG. 4 (S940). That is, a pilot symbol is mapped to $N_L$ tones constituting the pilot symbol at regular intervals of $L \cdot \Delta f_L$, and the remaining tones are assigned a zero (0) value.

The $N_L$-point IFFT is taken of the signal where the pilot tones are mapped (S950), and the signal is stored in the buffer. The signal is transmitted over two pilot symbols (S960). A cyclic prefix CP is inserted to the output signal $\overline{x}_{i,s}$ ($n$) of the buffer (S970). The cyclic prefix-inserted signal is converted to serial data and transmitted to the RF transmission unit (S980).

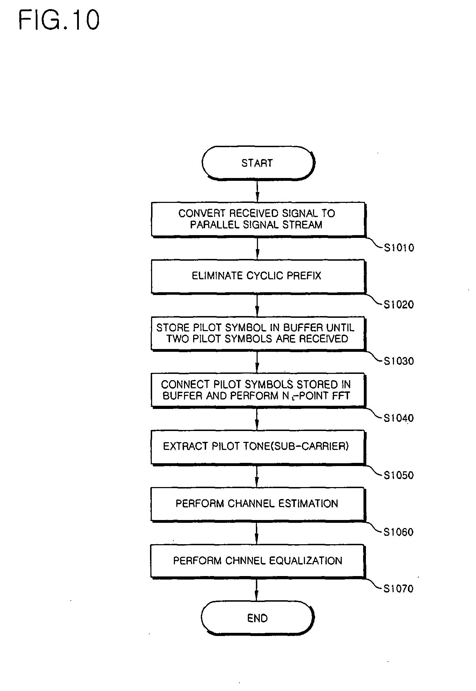

FIG. 10 is a flow chart of a method for receiving pilot symbols according to an exemplary embodiment of the invention.

A signal received through the RF receiving unit is converted to parallel data (S1010). A cyclic prefix CP is eliminated from the parallel data (S1020). After the cyclic prefix CP is eliminated, if the received signal is a pilot symbol, the pilot symbol is stored in the buffer (S1030). That is, the pilot symbols are stored in the buffer until two pilot symbols are received prior to taking FFT. The two pilot symbols are sequentially connected to each other, and the $N_L$-point FFT is taken of the pilot symbols (S1040). When $N_L$-point FFT is taken, the output signal has the $M_L$ pilot tones at regular intervals of $L \cdot \Delta f_L$ with no loss in orthogonality.

The pilot tone is extracted from the FFT output signal (S1050), and channel estimation is performed using the extracted pilot tone (S1060). Channel estimation techniques described above may be applied. Next, channel equalization of data symbols is performed based on the channel estimation value using the pilot tone, and data is demodulated (S1070).

The method for transmitting and receiving pilot symbols according to an exemplary embodiment of the invention may be applied to 4G or a wireless local area network (LAN) that uses OFDM.

The above-mentioned method according to the present embodiment of the invention may be stored in any form of recording media, such as CD-ROM, RAM, ROM, floppy disk, hard disk, or magneto-optical disk, or in any computer-readable form, such as computer code organized into executable programs.

As apparent from the above description, when the period of a pilot symbol inserted to a single frame is equal to a half of the period of a data symbol in an OFDM-based communication system, an interval between pilot tones of the pilot symbol is equal to twice an interval between data tones of the data symbol. Conventionally, this results in the frequency sampling rate being reduced upon conducting wireless channel estimation. To prevent the frequency sampling rate from being reduced, the present invention provides a method and apparatus for transmitting and receiving pilot symbols for channel estimation in an OFDM-based communication system that can increase the sampling rate of wireless channel estimation without a loss in bandwidth efficiency in a transmission unit using a distributed data tone mapping method.

In addition, a method and apparatus for transmitting and receiving pilot symbols in an OFDM-based communication system according to the present invention can be applied to a DFT spreading scheme for PAPR reduction in the OFDM system.

It will be apparent to those skilled in the art that various modifications and variation can be made in the present invention without departing from the scope of the invention. Thus, it is intended that the present invention cover the modifications and variations of this invention provided they come within the scope of the appended claims and their equivalents.

**Claims**

1. A method for transmitting pilot symbols in an orthogonal frequency division multiplexing-based communication system, comprising:

   taking Inverse Fast Fourier Transform (IFFT) of a first pilot symbol and a second pilot symbol each mapped to pilot tone frequencies assigned to a plurality of terminals; and
   phase-rotating the second pilot symbol.

2. The method of claim 1, wherein taking IFFT comprises:

   generating a plurality of pilot values;
   converting the pilot values to parallel data;
   modulating the parallel data according to a modulation order to output modulated pilot tones;
   mapping the modulated pilot tones to pilot tone frequencies assigned to the terminals; and
   taking IFFT of the modulated pilot tones.

3. The method of claim 2, wherein mapping the modulated pilot tones comprises:

mapping the modulated pilot tones at intervals of $L/2 \cdot \Delta f_P$ over a frequency of transmitted data tones for channel estimation; and

assigning a zero value to modulated pilot tones outside the frequency of transmitted data tones,

wherein L represents a number of terminals and $\Delta f_P$ represents an interval between modulated pilot tones of the first pilot symbol or the second pilot symbol.

4. The method of claim 2, wherein taking IFFT of the modulated pilot tones comprises taking $N_P$-point IFFT of the modulated pilot tones,

wherein $N_P$ represents a number of pilot tones of the first pilot symbol or the second pilot symbol.

5. The method of claim 1, wherein phase-rotating the second pilot symbol comprises:

phase-rotating an output signal of a terminal; and
inserting a cyclic prefix to the phase-rotated output signal and a non-phase-rotated output signal.

6. A method for transmitting pilot symbols in an orthogonal frequency division multiplexing-based communication system, comprising:

taking Inverse Fast Fourier Transform (IFFT) of pilot symbols mapped to pilot tone frequencies assigned to terminals;
storing a signal output from the IFFT ; and
transmitting a first portion of the signal in a first pilot symbol and a second portion of the signal in a second pilot symbol.

7. The method of claim 6, wherein taking IFFT of pilot symbols comprises:

generating a plurality of pilot values;
converting the pilot values to parallel data;
modulating the parallel data according to a modulation order to output modulated pilot tones;
mapping the modulated pilot tones to pilot tone frequencies assigned to the terminals; and
taking IFFT of the modulated pilot tones.

8. The method of claim 7, wherein mapping the modulated pilot tones comprises:

mapping the modulated pilot tones at intervals of $L \cdot \Delta f_L$ over a frequency of transmitted data tones for channel estimation; and
assigning a zero value to modulated pilot tones outside the frequency of transmitted data tones,

wherein L represents a number of terminals and $\Delta f_L$ represents an interval between data tones.

9. The method of claim 6, wherein taking IFFT of pilot symbols comprises taking $N_L$-point IFFT of the signal where the pilot tones are mapped,

wherein storing a signal output from the IFFT comprises storing the signal in a buffer where the $N_L$-point IFFT is taken, and

wherein transmitting comprises:

outputting the signal from the buffer over two pilot symbols;
inserting a cyclic prefix to the signal output from the buffer; and
converting the output signal with the cyclic prefix into serial data,

wherein $N_L$ represents a number of data tones.

10. A method for receiving pilot symbols in an orthogonal frequency division multiplexing-based communication system, comprising:

converting the pilot symbols to parallel data;
eliminating a cyclic prefix from the parallel data;

storing a first pilot symbol with no cyclic prefix in a buffer;
connecting the first pilot symbol and a second pilot symbol together;
taking $N_L$-point Fast Fourier Transform (FFT) of the connected pilot symbols to output an FFT output signal;
extracting pilot tones from the FFT output signal;
estimating channels using the pilot tones; and
performing channel equalization of data symbols based on the channel estimation to demodulate data.

**11.** An apparatus for transmitting pilot symbols in an orthogonal frequency division multiplexing-based communication system, comprising:

a tone mapping unit to map pilot tone frequencies assigned to terminals to pilot symbols to be transmitted; and
a phase rotation unit to receive the pilot symbols, and to phase-rotate even-numbered pilot symbols or odd-numbered pilot symbols.

**12.** The apparatus of claim 11, further comprising;

a pilot-value generation unit to generate pilot values for pilot tone modulation according to a modulation order; and
a modulation unit to convert the pilot values to parallel data and to modulate the parallel data according to the modulation order to output modulated pilot tones,

wherein the tone mapping unit maps the modulated pilot tones to pilot tone frequencies assigned to the terminals.

**13.** The apparatus of claim 12, wherein the tone mapping unit maps the modulated pilot tones at intervals of $L/2 \cdot \Delta f_P$ over a frequency of transmitted data tones, and assigns a zero value to modulated pilot tones outside the frequency of transmitted data tones,
wherein L represents a number of terminals and $\Delta f_P$ represents an interval between tones of the even-numbered pilot symbols or the odd-numbered pilot symbols.

**14.** The apparatus of claim 11, further comprising:

an Inverse Fast Fourier Transform (IFFT) unit to take IFFT of the pilot tones mapped to pilot tone frequencies;
a cyclic prefix insertion unit to insert a cyclic prefix to a pilot symbol phase-rotated by the phase rotation unit and to insert a cyclic prefix to a non-phase-rotated pilot symbol; and
a conversion unit to convert pilot symbols having the cyclic prefix into serial data.

**15.** The apparatus of claim 14, wherein the IFFT unit takes $N_P$-point IFFT of the pilot tones mapped to pilot tone frequencies,
wherein Np represents a number of pilot tones of a pilot symbol.

**16.** An apparatus for transmitting pilot symbols in an orthogonal frequency division multiplexing-based communication system, comprising:

a tone mapping unit to map pilot tone frequencies assigned to terminals to pilot symbols to be transmitted; and
a transmission unit to store a signal in a buffer and to transmit the signal over two pilot symbols.

**17.** The apparatus of claim 16, further comprising:

a pilot-value generation unit to generate pilot values for pilot tone modulation according to a modulation order; and
a modulation unit to convert the pilot values to parallel data, to modulate the parallel data according to the modulation order, and to output modulated pilot tones,

wherein the tone mapping unit maps the modulated pilot tones to pilot tone frequencies assigned to the terminals.

**18.** The apparatus of claim 17, further comprising an Inverse Fast Fourier Transform (IFFT) unit to take IFFT of the modulated pilot tones.

**19.** The apparatus of claim 18, wherein the tone mapping unit maps the modulated pilot tones at intervals of $L \cdot \Delta f_L$ over a frequency of transmitted data tones, and assigns a zero value to modulated pilot tones outside a frequency of transmitted data tones,
wherein L represents a number of terminals, and $\Delta f_L$ represents an interval between data tones.

20. The apparatus of claim 16, wherein the transmission unit comprises:

   a buffer to store the signal, and to output the signal over two pilot symbols;
   a cyclic prefix insertion unit to insert a cyclic prefix to the signal; and
   a conversion unit to convert the signal into serial data.

21. An apparatus for receiving pilot symbols in an orthogonal frequency division multiplexing-based communication system, comprising:

   a conversion unit to convert the pilot symbols to parallel data;
   a cyclic prefix elimination unit to eliminate a cyclic prefix from the parallel data;
   a buffer to store a first pilot symbol;
   a Fast Fourier Transform (FFT) unit to connect the first pilot symbol and a second pilot symbol together in the order received, to take $N_L$-point FFT of the connected pilot symbols, and to output an FFT output signal;
   a tone extraction unit to extract pilot tones from the FFT output signal;
   a channel estimation unit to estimate channels using the pilot tones; and
   a channel equalization unit to perform channel equalization of data symbols based on the channel estimation,

   wherein $N_L$ represents a number of data tones of the data symbols.

22. A mobile communication terminal in an orthogonal frequency division multiplexing-based communication system, comprising the apparatus of claim 21.

23. A method for transmitting pilot symbols in an orthogonal frequency division multiplexing-based communication system, comprising:

   taking Inverse Fast Fourier Transform (IFFT) of pilot symbols mapped to pilot tone frequencies assigned to terminals; and
   phase-rotating one of two adjacent pilot symbols.

24. An apparatus for transmitting pilot symbols in an orthogonal frequency division multiplexing-based communication system, comprising:

   a tone mapping unit to map pilot tone frequencies assigned to terminals to pilot symbols to be transmitted; and
   a phase rotation unit to phase-rotate one of two adjacent pilot symbols.

# FIG.1

| · · · | (n−1) FRAME | (n) FRAME(100) | (n+1) FRAME | · · · |
|---|---|---|---|---|

Tframe

| CP | DATA SYMBOL1 | CP | PILOT SYMBOL1 | CP | DATA SYMBOL2 | CP | DATA SYMBOL3 | · · · | CP | DATA SYMBOL $S_T$1 | CP | PILOT SYMBOL $S_P$ | CP | DATA SYMBOL $S_L$ |

$T_G$ | $T_L$ | | $T_P$

# FIG.2

## FIG.3

▲ TERMINAL1
● TERMINAL2
□ TERMINAL3
◇ TERMINAL4

DATA SYMBOL   FREQUENCY

$\Delta f_L$

$N_P=8$

$(L/2)\Delta f_L=2\Delta f_P$

$\Delta f_P$

▲ TERMINAL1, TERMINAL2
□ TERMINAL3, TERMINAL4

S-TH PILOT SYMBOL   FREQUENCY

## FIG.4

▲ TERMINAL1
● TERMINAL2
□ TERMINAL3
◇ TERMINAL4

DATA SYMBOL   FREQUENCY

$\Delta f_L$

$N_P=16$

$L\Delta f_L=4\Delta f_L$

▲ TERMINAL1
● TERMINAL2
□ TERMINAL3
◇ TERMINAL4

S-TH PILOT SYMBOL   FREQUENCY

# FIG.5

FIG.6

FIG.7

# FIG.8

```
                    ┌─────────────┐
                    │    START    │
                    └──────┬──────┘
                           │
          ┌────────────────▼────────────────┐
          │       GENERATE PILOT VALUE       │
          └────────────────┬────────────────┘
                           │              └─S810
          ┌────────────────▼────────────────┐
          │       CONVERT PILOT VALUE TO     │
          │          PARALLEL DATA           │
          └────────────────┬────────────────┘
                           │              └─S820
          ┌────────────────▼────────────────┐
          │     PERFORM PSK/QAM MODULATION   │
          └────────────────┬────────────────┘
                           │              └─S830
          ┌────────────────▼────────────────┐
          │   PERFORM MAPPING OF PSK/QAM     │
          │   MODULATED SYMBOL ONTO SET      │
          │   OF PILOT TONE FREQUENCIES      │
          └────────────────┬────────────────┘
                           │              └─S840
          ┌────────────────▼────────────────┐
          │       PERFORM Nₜ-POINT IFFT      │
          └────────────────┬────────────────┘
                           │              └─S850
          ┌────────────────▼────────────────┐
          │     PERFORM PHASE ROTATION OF    │
          │    IFFT OF (2q+1)-TH TERMINAL    │
          └────────────────┬────────────────┘
                           │              └─S860
          ┌────────────────▼────────────────┐
          │       INSERT CYCLIC PREFIX       │
          └────────────────┬────────────────┘
                           │              └─S870
          ┌────────────────▼────────────────┐
          │       CONVERT TO SERIAL DATA     │
          └────────────────┬────────────────┘
                           │              └─S880
                    ┌──────▼──────┐
                    │     END     │
                    └─────────────┘
```

PERFORM $N_t$-POINT IFFT

# FIG.9

```
          ┌─────────────┐
          │    START    │
          └──────┬──────┘
                 │
   ┌─────────────┴─────────────┐
   │    GENERATE PILOT VALUE    │
   └─────────────┬─────────────┘ ──S910
                 │
   ┌─────────────┴─────────────┐
   │   CONVERT PILOT VALUE TO   │
   │       PARALLEL DATA        │
   └─────────────┬─────────────┘ ──S920
                 │
   ┌─────────────┴─────────────┐
   │  PERFORM PSK/QAM MODULATION │
   └─────────────┬─────────────┘ ──S930
                 │
   ┌─────────────┴─────────────┐
   │  PERFORM MAPPING OF PSK/QAM │
   │  MODULATED SYMBOL ONTO SET  │
   │  OF PILOT TONE FREQUENCIES  │
   └─────────────┬─────────────┘ ──S940
                 │
   ┌─────────────┴─────────────┐
   │   PERFORM $N_t$-POINT IFFT  │
   └─────────────┬─────────────┘ ──S950
                 │
   ┌─────────────┴─────────────┐
   │ STORE IFFT SIGNAL IN BUFFER AND │
   │  TRANSMIT IFFT SIGNAL OVER TWO  │
   │       PIOLOT SYMBOLS       │
   └─────────────┬─────────────┘ ──S960
                 │
   ┌─────────────┴─────────────┐
   │     INSERT CYCLIC PREFIX    │
   └─────────────┬─────────────┘ ──S970
                 │
   ┌─────────────┴─────────────┐
   │    CONVERT TO SERIAL DATA   │
   └─────────────┬─────────────┘ ──S980
                 │
          ┌──────┴──────┐
          │     END     │
          └─────────────┘
```

# FIG.10

```
                    ┌─────────────┐
                    │    START    │
                    └──────┬──────┘
                           │
         ┌─────────────────▼─────────────────┐
         │  CONVERT RECEIVED SIGNAL TO       │
         │     PARALLEL SIGNAL STREAM        │
         └─────────────────┬─────────────────┘ ～S1010
                           │
         ┌─────────────────▼─────────────────┐
         │      ELIMINATE CYCLIC PREFIX      │
         └─────────────────┬─────────────────┘ ～S1020
                           │
         ┌─────────────────▼─────────────────┐
         │ STORE PILOT SYMBOL IN BUFFER UNTIL│
         │  TWO PILOT SYMBOLS ARE RECEIVED   │
         └─────────────────┬─────────────────┘ ～S1030
                           │
         ┌─────────────────▼─────────────────┐
         │  CONNECT PILOT SYMBOLS STORED IN  │
         │  BUFFER AND PERFORM N ᵣ-POINT FFT │
         └─────────────────┬─────────────────┘ ～S1040
                           │
         ┌─────────────────▼─────────────────┐
         │   EXTRACT PILOT TONE(SUB-CARRIER) │
         └─────────────────┬─────────────────┘ ～S1050
                           │
         ┌─────────────────▼─────────────────┐
         │     PERFORM CHANNEL ESTIMATION    │
         └─────────────────┬─────────────────┘ ～S1060
                           │
         ┌─────────────────▼─────────────────┐
         │    PERFORM CHNNEL EQUALIZATION    │
         └─────────────────┬─────────────────┘ ～S1070
                           │
                    ┌──────▼──────┐
                    │     END     │
                    └─────────────┘
```